# EUROPÄISCHE PATENTSCHRIFT

(11) **EP 0 326 071 B1**
(45) Veröffentlichungstag und Bekanntmachung des Hinweises auf die Patenterteilung: **03.04.1996**
(21) Anmeldenummer: 89101172.8
(22) Anmeldetag: 24.01.1989
(51) Int. Cl.: G10N 27/84

(54) **Verfahren und Einrichtung zur Magnetpulverprüfung**
Method and apparatus for testing with magnetic powder
Méthode et appareil pour le contrôle par poudre magnétique

(30) Priorität: 26.01.1988 DE 3802575
(43) Veröffentlichungstag der Anmeldung: 02.08.1989
(73) Patentinhaber: Helling Kommanditgesellschaft für Industrieprodukte und Anlagenbau (GmbH & Co.), D-22525 Hamburg (DE)
(72) Erfinder: Riess, Nathanael, D-2082 Uetersen (DE); Fritsch, Dieter, D-2800 Bremen 33 (DE)
(74) Vertreter: Meyer, Ludgerus A., Dipl.-Ing.

(56) Entgegenhaltungen:
- EP-A- 0 164 057
- DE-A- 1 573 451
- FR-A- 2 471 603
- US-A- 3 784 904
- PATENT ABSTRACTS OF JAPAN, Band 6, Nr. 248 (P-160)[1126], 7. Dezember 1982 & JP-A-57 146 157

## Beschreibung

Die Erfindung betrifft ein Verfahren und eine Einrichtung zur Magnetpulverprüfung nach den Oberbegriffen der Ansprüche 1 und 6.

Das Magnetpulververfahren dient zum Nachweis von vorwiegend spaltartigen Materialtrennungen an der Oberfläche von ferromagnetischen Werkstoffen. Beispielsweise können beim Gießprozeß Blasen, nichtmetallische Einschlüsse und Spannungsrisse entstehen. Letztere sind mit der Magnetpulverprüfung gut nachweisbar. Bei der Herstellung von Halbzeugen, z. B. durch Walzen, Ziehen oder Schmieden entstehen ferner Überwalzungen, Schmiedefehler und Risse. Weiter können bei der Wärmebehandlung mechanische Spannungen entstehen, die zu Rissen führen können.

Durch Anwendung des Magnetpulververfahrens können derartige oberflächennahe Fehler, deren Größenordnung im Bereich von 1 µm und deren Tiefe in der Größenordnung von unter 10 µm liegen können, festgestellt werden, soweit sie über der Rauhigkeitsgrenze der Oberfläche des Materials liegen. Die Nachweisbarkeit ist ferner von der verwendeten magnetischen Feldstärke und der örtlichen Feldstärkeänderung abhängig.

Zur Anwendung des Magnetpulverfahrens muß das Werkstück auf geeignete Weise magnetisiert werden. Das auf das Werkstück aufgebrachte Magnetpulver orientiert sich dann an den in das Werkstück eintretenden Feldlinien des Magnetfeldes. An Fehlstellen des Werkstücks treten dabei Diskontinuitäten des aufgebrachten Magnetpulvers auf, die erkennbar sind.

Die Magnetisierung des Werkstücks kann auf verschiedene Weise vorgenommen werden. Für verschiedene Einsatzzwecke sind verschiedene Magnetisierungsmethoden entwickelt worden.

Bei der sogenannten Joch-Magnetisierung gelangt der magnetische Fluß über ferromagnetische Joche in das Werkstück. Die Hauptfeldrichtung ist die Verbindungslinie der beiden Pole des Joches. Wenn die Joche als Einspannvorrichtung ausgebildet sind, wird das gesamte Werkstück magnetisiert. Es können aber auch Handmagnete auf das Werkstück aufgesetzt werden, die den Bereich zwischen den Polen magnetisieren. Um eine ausreichend kräftige Magnetisierung zu erreichen, ist eine gute magnetische Ankopplung an das Werkstück erforderlich. Bei stark strukturierten Werkstücken ist dies in vielen Fällen nicht möglich. Ferner erfordert dieses Verfahren die Anpassung der Magnetpole an das Werkstück, so daß der Einsatz dieses Verfahrens umständlich und begrenzt ist.

Aus der DE-AS 15 73 451 ist eine Spulenvorichtung für die zerstörungsfreie Werkstoffprüfung unter Verwendung eines Magnetfeldes bekannt, bei dem zur gleichzeitigen Längs- und Querfehlerfeststellung eine Längsmagnetisierung des Prüflings mit Hilfe einer im Mittelbereich überkreuzten Spule erfolgt und die Quermagnetisierung als Ringmagnetisierung unter Verwendung der Stromdurchflutung des Prüflings ausgeführt ist.

Bei der Stromdurchflutung wird ein Stromfluß im Werkstück um zwei aufgesetzte Pole erzeugt. Der Nachteil dieses Verfahrens liegt in der elektrischen Ankopplung an das Werkstück, die eine gute Kontaktgabe erfordert, was bei stark strukturierten Werkstücken nicht ohne weiteres möglich ist.

Diese Erfindung ist nicht für lange Werkstücke geeignet Sie ist außerdem aufwendig und nicht für einen kontinuierlichen Betrieb einsetzbar.

Eine ähnliche Einrichtung ist aus der DE 29 49 449 C2 bekannt. Diese verwendet eine etwas geänderte Spulengestaltung, die eine Querdurchführung eines Werkstückes durch die Einrichtung gestattet. Eine Prüfung langer Werkstücke ist auch hiermit nicht möglich.

Bei der Prüfung von Rohres ist es auch bekannt, eine Mittelleitermagnetisierung zu verwenden, bei der ein Schenkel einer Spule durch das Rohr geführt wird, während der andere Schenkel der Spule außen an dem Rohr entlanggeführt wird. Diese Magnetisierungsart erfordert das Hindurchziehen eines Leiters durch das Rohr, das bei langen Rohren nicht mehr möglich ist.

Bei einer Magnetisierung mit Hilfe von Spulen, wie sie aus Patents Abstracts of Japan, Band 6, Nr. 248 (P-160) 1126 von 7.12.1982 bzw. JP-A-57 146 157 bekannt ist, wird das Werkstück spiralförmig durch zwei benachbarte ringförmige Spulen hindurchgeführt.

Aus der EP 164 057 A3 ist ein Magnetisierungsverfahren bekannt, bei dem ebenfalls ein spiralförmiger Durchlauf durch die Einrichtung verwendet wird. Dabei läuft das Werkstück berührungslos über jochförmige Schenkel eines Magneten zur Quermagnetisierung des Werkstücks. Um gleichzeitig Längs- und Querfehler feststellen zu können, kann ein zweiter eine Längsmagnetisierung bewirkender Magnet vorgesehen sein.

Allen angegebenen Verfahren ist gemeinsam, daß sie bis auf das Verfahren der Spulenmagnetisierung für eine hohe Empfindlichkeit eine Kontaktgabe mit dem Werkstück erfordern, so daß die Anwendbarkeit stark von der Struktur des Werkstücks abhängt. Ferner besteht eine starke Abhängigkeit der Anwendung des Verfahrens von der Größe und Form des Werkstücks. Bei der Spulenmagnetisierung oder der Mittelleitermagnetisierung sind in der Regel nur Fehler in einer Richtung feststellbar.

Der Erfindung liegt die Aufgabe zugrunde, ein verbessertes Verfahren und eine verbesserte Einrichtung zur berührungslosen Magnetpulverprüfung von ferromagnetischen Werkstücken anzugeben, durch die eine einfache, flexible, genaue Ermittlung von Fehlstellen, insbesondere Oberflächenrissen, eines Werkstücks in beliebigen Richtungen im kontinuierlichen Durchlauf möglich ist.

Diese Aufgabe wird durch die in Ansprüchen 1 und 6 angegebene Erfindung gelöst. Vorteilhafte Weiterbildungen der Erfindung sind in Unteransprüchen angegeben.

Der besondere Vorteil der Erfindung liegt darin, daß das verwendete Verfahren berührungs- und kontaktlos arbeitet. Dadurch ist die Abhängigkeit von der Form und Größe eines Werkstücks beträchtlich verringert. Es können nahezu beliebig geformte Teile geprüft werden. Die Erfindung eignet sich insbesondere für die Prüfung von Endlosrohren.

Da das Werkstück bei der Prüfung insgesamt durchflutet wird, ist die Durchflutung im wesentlichen lageunabhängig. Das Werkstück kann daher ohne weiteres gedreht werden, ohne daß die Durchflutung verringert wird. Die Erfindung ermöglicht einen kontinuierlichen Durchlauf von Werkstücken, insbesondere Rohren, so daß sich die Prüfzeit beträchtlich verringern kann.

Die Erfindung ist sowohl für ein Trocken- als auch ein Naß- verfahren verwendbar. Vorzugsweise wird die Erfindung im Trockenverfahren angewendet. Das Aufbringen des Pulvers ist von oben, von den Seiten oder von unten aus einem Behälter möglich. Wenn das Magnetpulver von unten aus dem Behälter zugeführt wird, kann das Magnetpulver selbst die Stärke des Magnetflusses beeinflussen, da sich die Pulverteilchen entlang der Feldlinien ausrichten und damit aufgrund ihrer magnetischen Eigenschaften den magnetischen Widerstand im Feldraum verringern. Bei Verwendung eines magnetischen Wechselfeldes läßt sich der Skineffekt der Durchflutung ausnutzen, so daß das magnetische Feld an der Oberfläche des Werkstücks konzentriert werden kann.

Aufgrund der besonderen Form der bei der Erfindung verwendeten Luftspule können sowohl Längsfehler als auch Querfehler des Werkstückes in einem Durchlauf festgestellt werden.

Durch die Erfindung läßt sich die Nachweisbarkeit von Fehlern verbessern. Durch die Beobachtung der Diskontinuitäten an Fehlstellen im Bereich des Ein- oder Austritts von Feldlinien am Werkstück, ergibt sich auch eine schärfere Anzeige der Diskontinuität.

Ein weiterer Vorteil der Erfindung liegt darin, daß das Werkstück bei kontinuierlichem Durchlauf des Werkstücks durch die Einrichtung nach der Erfindung beim Verlassen der Einrichtung selbsttätig entmagnetisiert wird.

Nachfolgend wird die Erfindung anhand eines Ausführungsbeispiels näher erläutert.

Es zeigen:
- Fig. 1: eine Prinzipdarstellung der erfindungsgemäß verwendeten Einrichtung,
- Fig. 2: eine Aufsicht auf eine Ausführungsform der Erfindung,
- Fig. 3: eine Seitenansicht einer Ausführungsform der Erfindung,
- Fig. 4: eine schematische Ansicht eines Prüfbehälters,
- Fig. 5: eine Darstellung zur Verdeutlichung des Meßverfahrens bei der Anwendung an einem Rohr.

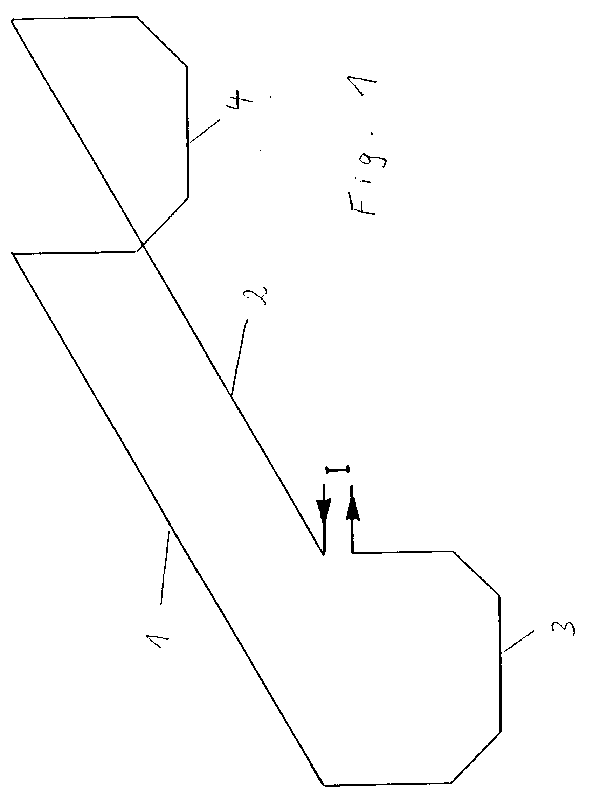

Fig. 1 zeigt den grundsätzlichen Aufbau einer erfindungsgemäß verwendeten Spule. Die dargestellte Spulenwindung besteht aus zwei Längsleiterabschnitten 1 und 2, die parallel zueinander liegen und zwei Endleiterabschnitten 3 und 4, die gegenüber den Längsleiterabschnitten 1 und 2 U-förmig nach unten abgekröpft sind. Die Spule ist daher in etwa sattelförmig aufgebaut.

Die Spule wird von einem Strom I durchflossen, der entweder Gleichstrom oder Wechselstrom sein kann. Dadurch bildet sich um die Leiterabschnitte ein magnetisches Feld aus, dessen Richtung in jedem Leiterabschnitt senkrecht zur Leiterrichtung liegt. Die gewählte Anordnung der Spule erzeugt daher ein Magnetfeld, das an den Enden der gestreckten Spule senkrecht zur Richtung des Magnetfeldes zwischen den beiden Längsleitern liegt. Die Hindurchführung eines Werkstücks von einem Ende zum anderen Ende der Spule bewirkt daher, daß das Werkstück in verschiedenen Richtungen magnetisch durchflossen wird.

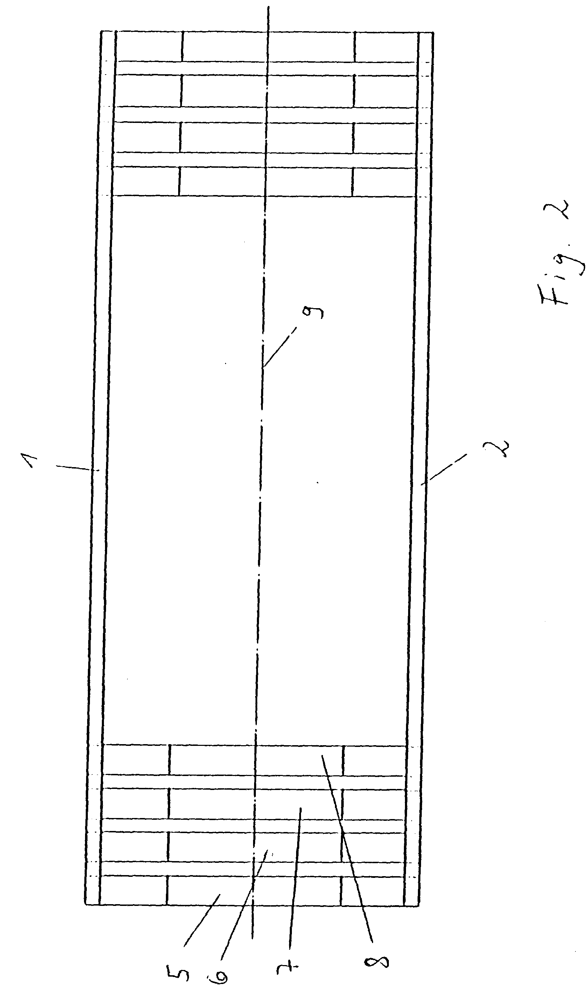

Fig. 2 zeigt eine Aufsicht auf eine Ausführungsform der Erfindung, bei der die Endleiterabschnitte 3 und 4 aus vier Windungsabschnitten 5 - 8 gebildet sind, die in Axialrichtung 9 nebeneinander und im gleichen Abstand zur Achse 9 angeordnet sind.

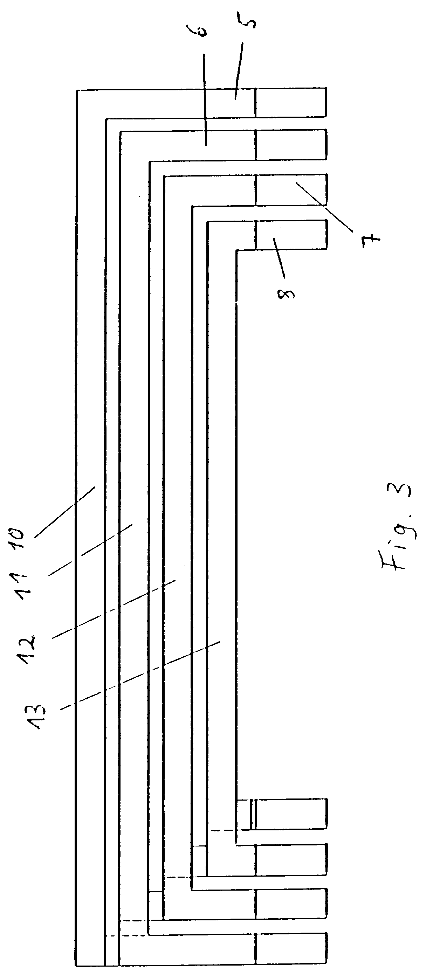

Fig. 3 zeigt die Anordnung nach Fig. 2 von der Seite gesehen. Die an die Leiterabschnitte 5 - 8 anschließenden Längsleiterabschnitte 10 - 13 liegen parallel untereinander und bilden die Längsleiter 1 und 2 gem. Fig. 1. Es sind insgesamt 4 Windungen vorgesehen. Deren Zahl kann jedoch auch größer oder kleiner gemacht werden, ja nach Erfordernis und Aufwand, der für die Anwendung der Erfindung am günstigsten erscheint.

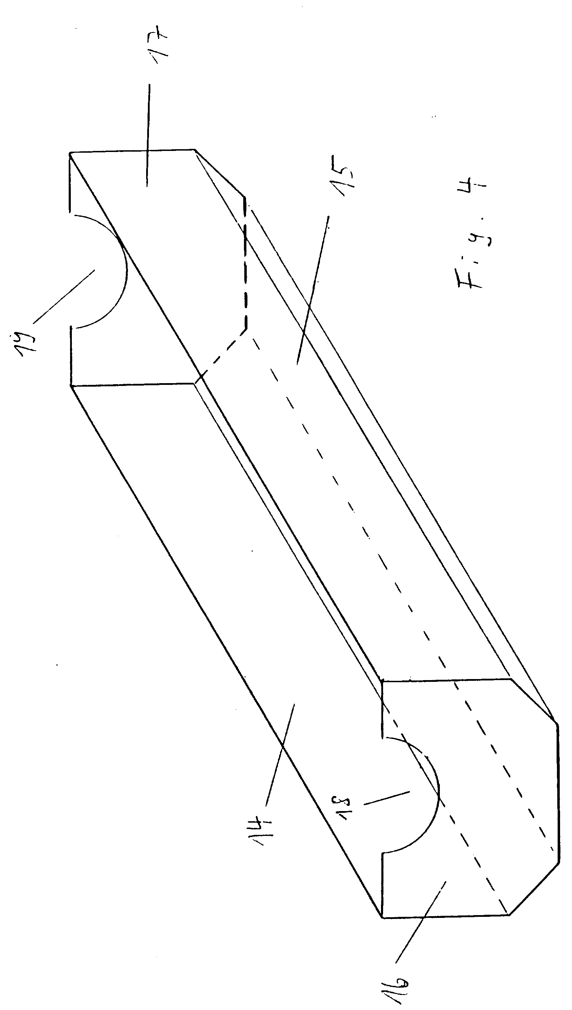

Fig. 4 zeigt eine prinzipielle Darstellung einer ausgeführten Anordnung der Erfindung. Die in den Figuren 1 - 3 dargestellte Luftspule ist dabei in die Wand eines Behälters eingesetzt, der aus zwei Seitenwänden 14 und 15, zwei Endwänden 16 und 17 und einer Bodenwand gebildet ist.

Die Leiterabschnitte 5 - 8 und 10 - 13 der Luftspule gem. Figur 1 und 3 liegen dabei in den Wandbereichen des Behälters nach Fig. 4. Die Leiterabschnitte 10 - 13 befinden sich in den Seitenwänden 14 und 17, während die Leiterabschnitte 5 - 8 in der Nähe der Endwände 16 und 17 die Leiterabschnitte 10 - 13 U-förmig entlang des Umfangs des Behälters nach Fig. 4 verbinden.

Die Endwände 16 und 17 dienen im wesentlichen dazu, das in den Behälter eingefüllte Magnetpulver 20 zu halten. Durch die Ausschnitte 18 und 19 können Werkstücke durch die erfindungsgemäße Einrichtung hindurchgeführt werden, wobei sie am Rand der Ausschnitte 18 und 19 oder durch andere geeignete Abstreifeinrichtungen von dem in der Einrichtung aufgebrachten Magnetpulver gereinigt werden. Dieser Vorteil ergibt sich insbesondere bei der Prüfung von außen glatten Rohren.

Wenn ein magnetisches Wechselfeld verwendet wird, schwächt sich die magnetische Durchflutung eines rohrförmigen Werkstücks nach Verlassen der erfindungsgemäßen Einrichtung kontinuierlich im Wechsel ab, so daß eine selbsttätige Entmagnetisierung des Werkstücks erfolgen kann.

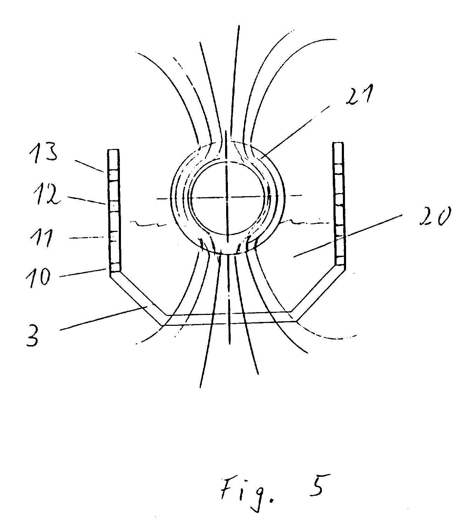

Fig. 5 zeigt das Prinzip des erfindungsgemäßen Verfahrens. Der verwendete Behälter ist im Querschnitt im wesentlichen U-förmig ausgebildet. In den seitlichen Wänden sind Leiterabschnitte 10 - 13 dargestellt, die bei aufgebrachtem Stromfluß das dargestellte magnetische Feld zwischen den Leiterabschnitten der auf beiden Seiten des Behälter in den Seitenwänden angeordneten Leiter erzeugen. Es ist dargestellt, daß die erzeugten Feldlinien sich annähernd vertikal vom Boden des Behälters zum Werkstück erstrecken, das sich berührungs- und kontaktlos zwischen den Behälterwänden befindet. Das Werkstück taucht dabei zum Teil in das Magnetpulver 20 ein, das sich im Behälter befindet. Das Magnetpulver 20 hat die Eigenschaft, die magnetischen Feldlinien zum Werkstück hin zu konzentrieren. Damit wird die Flußdichte im Werkstück beträchtlich erhöht und damit die Anzeigeempfindlichkeit erheblich verbessert.

Bei der Anordnung nach der Erfindung wird der gesamte magnetische Fluß durch das Werkstück hindurchgeführt, wobei dieser auch bei einer Drehung des Werkstücks voll erhalten bleibt.

Bei der in Fig. 5 dargestellten Anordnung, bei der sich ein Rohr in der Einrichtung befindet, teilt sich der an der Unterseite des Rohres eintretende magnetische Fluß in die beiden Hälften des Rohres auf und tritt an der Oberseite wieder als gemeinsamer Fluß aus dem Werkstück aus. Wenn z. B. ein Riß an der Unterseite des Rohres vorliegt, bildet sich dort eine Diskontinuität der anhaftenden Magnetpulverteilchen aus, die bei Drehung des Rohres um 180° zur Oberseite geführt wird. Infolge des dort aus- oder eintretenden Magnetflusses ist an dieser Stelle wieder eine hohe Ansprechempfindlichkeit gegeben. Da die Spulenleiter seitlich von dem Werkstück angeordnet sind, und an dieser Stelle keine weiteren die Beobachtung behindernden Einrichtungen vorhanden sind, kann die Oberfläche des Rohres hier frei zugänglich beobachtet werden.

Vorzugsweise wird das Werkstück bei axialem Durchlauf durch die erfindungsgemäße Einrichtung um die eigene Achse gedreht, so daß jede Oberflächenstelle des Werkstücks wenigstens einmal durch das Magnetpulver 20 hindurchgeführt wird und an der Oberseite der Anordnung erscheint. Auf diese Weise läßt sich ein kontinuierliches Hindurchführen des Werkstücks durch die Einrichtung vornehmen, wobei eine kontinuierliche Prüfung der Oberflächeneigenschaft des Werkstücks möglich ist.

Anstelle eines Trockenpulvers kann auch eine Suspension verwendet werden, die von oben auf das Werkstück aufgegeben wird. Derartige Suspensionen enthalten einen etwa 1 o/oo-Anteil von Magnetpulver und sind für die Magnetpulverprüfung bekannt.

Das Magnetpulver kann im Prinzip von oben oder von unten auf das Werkstück aufgebracht werden, wobei bei Verwendung eines Trockenverfahrens mit einer größeren Menge eines in den Behälter eingefüllten Magnetpulvers keine ständige Zufuhr von Magnetpulver erforderlich ist.

Die Verwendung von Trockenpulver weist auch noch den Vorteil auf, daß die Höhe der Pulverablagerung ein Indiz für die Fehlergröße darstellt.

Die erfindungsgemäße Anordnung ermöglicht die Drehung des Werkstücks im aktiven Magnetfeld, ohne daß sich der magnetische Fluß ändert.

Aufgrund der Magnetfeldverteilung in der Anordnung können im mittleren Bereich der Anordnung im wesentlichen Längsfehler des Werkstücks festgestellt werden, während im Endbereich durch das um 90° zum mittleren Bereich gedrehte Magnetfeld im wesentlichen Querfehler des Werkstücks feststellbar sind.

Bei kontinuierlichem Durchlauf des Werkstücks durch die Anordnung sind daher in einem Durchgang alle Fehlerrichtungen feststellbar.

Aufgrund der offenen Bauweise der Anordnung ist ein freier Zugang zum Meßbereich, d. h. dem Bereich, in dem die Feststellung von Fehlern erfolgt, möglich. Anstelle einer visuellen Kontrolle können dort auch Bilderkennungs-Einrichtungen eingesetzt werden, durch die ein automatisches Erfassen des Fehlerbildes möglich ist. Damit läßt sich eine automatische Protokollierung oder Steuerung des Fertigungsprozesses durchführen.

Das Wandmaterial des Behälters, in das die Windungen der Luftspule eingesetzt sind, ist vorzugsweise aus Kunststoff gebildet, so daß ohne Verwendung ferromagnetischer Teile ein ungehinderter Magnetfluß erzeugt werden kann, der allein durch das in die Einrichtung eingebrachte Werkstück gerichtet wird.

### Bezugszeichenliste

- 1: Längsleiter
- 2: Längsleiter
- 3: Endleiter
- 4: Endleiter
- 5 - 8: Windungsabschnitte
- 9: Achse
- 10 - 13: Windungsabschnitte
- 14: Seitenwand
- 15: Seitenwand
- 16: Endwand
- 17: Endwand
- 18: Ausschnitt
- 19: Ausschnitt
- 20: Magnetpulver
- 21: Werkstück

## Patentansprüche

1. Verfahren zur Magnetpulverprüfung an ferromagnetischen Werkstoffen, insbesondere zur Rissprüfung, bei dem ein Werkstück (21) in das magnetische Feld einer Spule gebracht und Fehlstellen des Werkstücks durch Feststellung der im Magnetfeld resultierenden Ausrichtung von auf das Werkstück aufgebrachtem ferromagnetischem Pulver im Bereich des Feldlinienaus- oder -eintritts ermittelt werden, dadurch gekennzeichnet, daß das Werkstück zur gleichzeitigen oder aufeinanderfolgenden Längs- und Querfehlerfeststellung berührungslos in Axialrichtung zwischen zwei parallel zueinander liegenden Längsleiterabschnitten (1, 2) einer Spule mit gegenüber den Längsleiterabschnitten (1, 2) U-förmig abgekröpften Endleiterabschnitten (3, 4) hindurchgeführt wird.

2. Verfahren nach Anspruch 1, dadurch gekennzeichnet, daß die abgekröpften Endleiterabschnitte (3, 4) der Spule nach unten gerichtet sind und die Spule einen Teil eines schalenförmigen Behälters mit wandförmigen Abschluß (16, 17) an den Enden des Behälters bildet, durch den das Werkstück hindurchgeführt wird.

3. Verfahren nach Anspruch 2, dadurch gekennzeichnet, daß trockenes Magnetpulver (20) in den Behälter eingefüllt wird, daß das Werkstück (21) teilweise in das Magnetpulver eingetaucht wird, daß die Feststellung von Fehlstellen des Werkstücks nach einer Drehung des Werkstücks um wenigstens 180° um die Längsachse (9) des Behälters erfolgt und daß die Fehlstellen im wesentlichen in einer Normalebene festgestellt werden, die senkrecht auf einer die Längsleiterabschnitte (1, 2) der Spule schneidenden Ebene steht.

4. Verfahren nach Anspruch 2 oder 3, dadurch gekennzeichnet, daß das Werkstück in Längsrichtung der Spule unter axialer Drehung durch den Behälter geführt wird.

5. Verfahren nach Anspruch 2 oder 4, dadurch gekennzeichnet, daß das Magnetpulver in einer Suspension auf die Oberseite des Werkstücks gegeben wird.

6. Einrichtung zur Durchführung eines Verfahrens nach Anspruch 1, dadurch gekennzeichnet, daß eine Luftspule mit zwei Längsleiterabschnitten (1, 2) und mit gegenüber den Längsleiterabschnitten (1, 2) U-förmig abgekröpften Endleiterabschnitten vorgesehen ist, woei das Werkstück parallel zu den Längsleiterabschnitten (1, 2) durch die Luftspule hindurchführbar ist.

7. Einrichtung nach Anspruch 6, dadurch gekennzeichnet, daß die Luftspule in den Wandbereich (14 - 17) eines schalenförmig geformten Behälters eingesetzt ist, wobei die Längsleiterabschnitte (1, 2) der Spule in den seitlichen Wänden (14, 17) des Behälters und die abgekröpften Endleiterabschnitte (3, 4) der Spule an den U-förmigen Endkanten (16, 17) des Behälters ausgebildet sind.

8. Einrichtung nach Anspruch 7, dadurch gekennzeichnet, daß die Endseiten (16, 17) des Behälters einen den Behälter wenigstens teilweise abschließenden Wandbereich bilden.

9. Einrichtung nach Anspruch 6, dadurch gekennzeichnet, daß die Spule aus mehreren parallel zur Behälterkante verlaufenden Windungen (5 - 8, 10 -13) besteht.

10. Einrichtung nach einem der Ansprüche 7 - 9, dadurch gekennzeichnet, daß das Wandmaterial des Behälters aus Kunststoff besteht.

## Claims

1. Method for magnetic powder detection on ferromagnetic materials, particularly for the detection of cracks, in which a workpiece (21) is brought into the magnetic field of a coil and defects of the workpiece are determined by ascertainment, in the region of the field line exit or entry, of the orientation, resulting within the magnetic field, of ferromagnetic powder applied to the workpiece, characterized in that, for the purpose of simultaneous or successive location of longitudinal and transverse faults, the workpiece is passed in the axial direction, without contact, between two parallel longitudinal conductor sections (1, 2) of a coil with end conductor sections (3, 4) which are bent in a U shape at right angles to the longitudinal conductor sections (1, 2).

2. Method according to Claim 1, characterized in that the end conductor sections (3, 4) of the coil which are bent at right angles are aligned downwards and the coil forms a part of a dish-type container with a wall-type occlusion (16, 17) at the ends of the container through which the workpiece is passed.

3. Method according to Claim 2, characterized in that dry magnetic powder (20) is filled into the container, in that the workpiece (21) is partially immersed in the magnetic powder, in that defects of the workpiece are located following rotation of the workpiece by at least 180° around the longitudinal axis (9) of the container and in that the defects are essentially located in a normal plane which is perpendicular to a plane which intersects the longitudinal conductor sections (1, 2) of the coil.

4. Method according to Claim 2 or 3, characterized in that the workpiece is passed through the container in the longitudinal direction of the coil while being rotated about its axis.

5. Method according to Claim 2 or 4, characterized in that the magnetic powder is applied in a suspension to the upper side of the workpiece.

6. Device for execution of a method according to Claim 1, characterized in that there is provided an air-core coil with two longitudinal conductor sections (1, 2) and with end conductor sections which are bent in a U shape at right angles to the longitudinal conductor sections (1, 2), the workpiece being capable of being passed through the air-core coil in parallel to the longitudinal conductor sections (1, 2).

7. Device according to Claim 6, characterized in that the air-core coil is set into the wall region (14 - 17) of a container, shaped in the form of a dish, the longitudinal conductor sections (1, 2) of the coil being fashioned in the side walls (14, 17) of the container and the end conductor sections (3, 4) of the coil which are bent at right angles being fashioned on the U-shaped end edges (16, 17) of the container.

8. Device according to Claim 7, characterized in that the end faces (16, 17) of the container form 3 wall region which occludes the container, at least partially.

9. Device according to Claim 6, characterized in that the coil consists of several windings (5 - 8, 10 - 13) which run parallel to the edge of the container.

10. Device according to any one of Claims 7 - 9, characterized in that the wall of the container consists of a plastics material.

## Revendications

1. Procédé pour le contrôle par poudre magnétique de pièces ferromagnétiques, en particulier pour le contrôle de fissures, selon lequel on amène une pièce (21) dans le champ magnétique d'une bobine et on recherche les défauts de la pièce en déterminant l'orientation qui apparaît dans le champ magnétique pour la poudre ferromagnétique appliquée sur la pièce, dans la zone de la sortie ou de l'entrée des lignes de champ, caractérisé en ce que pour déterminer simultanément ou successivement des défauts longitudinaux et transversaux, on fait passer la pièce dans le sens axial, sans contact, entre deux sections conductrices longitudinales parallèles (1, 2) d'une bobine pourvue de sections conductrices d'extrémité (3, 4) coudées en U par rapport auxdites sections conductrices longitudinales (1, 2).

2. Procédé selon la revendication 1, caractérisé en ce que les sections conductrices d'extrémité coudées (3, 4) de la bobine sont dirigées vers le bas et la bobine définit une partie d'un récipient en forme de cuvette comportant, aux extrémités dudit récipient, une bordure en forme de paroi (16, 17) par laquelle on fait passer la pièce.

3. Procédé selon la revendication 2, caractérisé en ce qu'on verse de la poudre magnétique sèche (20) dans le récipient, en ce qu'on plonge partiellement la pièce (21) dans la poudre magnétique, en ce qu'on détermine les défauts de la pièce après l'avoir fait tourner d'au moins 180° sur l'axe longitudinal (9) au récipient, et en ce qu'on détermine les défauts sensiblement dans un plan normal qui est perpendiculaire à un plan coupant les sections conductrices longitudinales (1, 2) de la bobine.

4. Procédé selon les revendications 2 ou 3, caractérisé en ce qu'on fait passer la pièce à travers le récipient dans le sens longitudinal de la bobine moyennant une rotation axiale.

5. Procédé selon les revendications 2 ou 4, caractérisé en ce qu'on amène la poudre magnétique sous forme de suspension sur le côté supérieur de la pièce.

6. Dispositif pour la mise en oeuvre d'un procédé selon la revendication 1, caractérisé en ce qu'il est prévu une bobine à air comportant deux sections conductrices longitudinales (1, 2) et des sections conductrices d'extrémité coudées en U par rapport auxdites sections conductrices longitudinales (1, 2), la pièce étant apte à traverser la bobine à air parallèlement à celles-ci.

7. Dispositif selon la revendication 6, caractérisé en ce que la bobine à air est placée dans la zone des parois (14-17) d'un récipient en forme de cuvette, les sections conductrices longitudinales (1, 2) de la bobine étant formées dans les parois latérales (14, 15) du récipient tandis que les sections conductrices d'extrémité coudées (3, 4) de la bobine sont formées sur les bords d'extrémité en U (16, 17) du récipient.

8. Dispositif selon la revendication 7, caractérisé en ce que les côtés d'extrémité (16, 17) du récipient définissent une zone de paroi qui ferme au moins en partie le récipient.

9. Dispositif selon la revendication 6, caractérisé en ce que la bobine se compose de plusieurs enroulements (5-8, 10-13) parallèles au bord du récipient.

10. Dispositif selon l'une des revendications 7 à 9, caractérisé en ce que le matériau de la paroi du récipient se compose de matière plastique.
